# EUROPEAN PATENT SPECIFICATION

(11) **EP 1 611 001 B1**
(45) Date of publication and mention of the grant of the patent: **09.04.2008**
(21) Application number: 04715608.8
(22) Date of filing: 27.02.2004
(51) Int. Cl.: B62D 7/22, B62D 1/16, B62D 1/19

(54) **ARRANGEMENT FOR VIBRATION DAPING IN A STEERING COLUM**
ANORDNUNG ZUR VIBRATIONSDÄMPFUNG FÜR EINE LENKSÄULE
DISPOSITIF D'AMORTISSEMENT DES VIBRATIONS DANS UNE COLONNE DE DIRECTION

(30) Priority: 10.04.2003 SE 0301060
(43) Date of publication of application: 04.01.2006
(73) Proprietor: VOLVO LASTVAGNAR AB, 405 08 Göteborg (SE)
(72) Inventor: BODIN, Jan-Olof, S-441 65 Alingsas (SE)
(74) Representative: Andersson, Per Rune
(86) International application number: PCT/SE2004/000266
(87) International publication number: WO 2004/089726

(56) References cited:
- EP-A2- 0 739 806
- WO-A1-99/58876
- US-A- 5 772 244
- US-A- 6 135 224

## Description

### TECHNICAL FIELD

The invention relates to an arrangement for damping vibrations in a vehicle steering wheel mounted on a steering main shaft connected to a pair of steered wheels via a steering linkage.

### BACKGROUND ART

One type of vibration damper is previously known from GB 2 274 263, which describes a damping rubber bushing in the steering linkage for damping vibrations from the roadway and imbalance in the steered wheels of the vehicle. The disadvantage of this type of damper is that a rubber bushing loses its elasticity as it ages and dries out, with crack formation and an impaired damping function as a consequence.

Another type of damper is known from EP 442 570, which describes a steering column provided with a liquid damper. Both the steering column and an inner surface of a housing which surrounds the steering column are provided with a number of disks or plates which extend in radially between one another. The space between the disks is filled with a liquid which damps relative movement between the disks if vibrations arise in the steering column. The disadvantage of this solution is that it comprises a number of seals which are subjected to vibrations from the wheels and the steering linkage and also to radial loads when rotation and turning of the steering column take place. There is therefore a constant risk of leakage of damping liquid, which in turn would lead to extensive fault-tracing and complicated repair.

It is also a common feature of the examples indicated above that they are intended primarily for damping low-frequency vibrations. The highest frequencies they are intended to damp are those brought about by imbalance in one or more wheel(s).

The invention aims to solve the above problems by producing a simple, maintenance-free vibration damper. Another aim of the invention is to produce a simple damper which can damp vibrations of varying frequency, especially of higher frequency, for example vibrations caused by the engine of the vehicle or auxiliary equipment driven by it.

### DISCLOSURE OF INVENTION

The object of the invention is therefore to provide an arrangement for bringing about a simple, maintenance-free vibration damper, which can also be adapted to different frequencies if required. This solution is described by the features in patent claim 1 relating to a vibration-damping arrangement.

The invention relates to an arrangement for damping vibrations in a vehicle steering wheel mounted on a steering main shaft connected to a pair of steered wheels via a steering linkage. According to a preferred embodiment, the steering main shaft comprises a hollow portion along its longitudinal axis, which portion is filled with a granular material to a predetermined level. This level is proportional to the shape and cross-sectional area of the hollow portion and also the frequency range of the vibrations to be damped. By measuring the dimensions of the hollow portion, the volume of a predetermined material with a given density which is required in order to damp vibrations in a frequency range applying for the vehicle can be calculated.

The arrangement is preferably arranged to damp high-frequency vibrations, which can be transmitted through the chassis or steering linkage of the vehicle from the engine of the vehicle or auxiliary equipment driven by the engine. The frequency of the vibrations can vary according to vehicle type, engine size and engine version. Different frequencies or frequency ranges can be damped with the same type of steering main shaft by selecting material, grain size and the filling level of the portion.

The vibration-damping arrangement is arranged to damp vibrations with a frequency exceeding 30 Hz, which corresponds essentially to the lowest idling speed of the engine. However, the arrangement is intended to damp resonant vibrations with frequencies within a range corresponding to the whole engine speed register of the vehicle, for example 20-150 Hz. The speed register for trucks may be 500-3000 rpm, while the corresponding figures for private cars may be 800-7000 rpm.

The hollow portion of the steering main shaft preferably has a circular or annular cross section, although other cross sections are possible. A circular portion can consist of a delimited part of a tubular steering main shaft, while an annular portion can consist of a cylindrical or conical portion located around, and fixed to, a solid or hollow steering main shaft. In this connection, the hollow portion can be closed at its upper and lower end and be provided with at least one closable opening for filling with, emptying out or exchanging granular material.

The granular material preferably consists of an abrasion-resistant material with an average diameter which can be selected within the range 0.1 to 5 mm, preferably 0.5 to 1 mm. The material can consist of more or less spherical grains or balls made of a ferromagnetic material, such as steel, or of a ceramic material. The spherical grains or the balls can be solid or sintered. Other types of material such as silicon/glass or mixtures of the above materials are also possible. It is suggested that the granular material should have a density exceeding 3000 kg/m³.

### DESCRIPTION OF FIGURES

The invention will be described in greater detail below with reference to illustrative embodiments shown in the accompanying drawings, in which
- Figure 1: shows a diagrammatic illustration of a vehicle provided with a steering main shaft according to the invention;
- Figure 2A: shows a vibration damper according to the invention, located centrally in a steering main shaft;
- Figure 2B: shows a vibration damper according to the invention, located around a steering main shaft;
- Figure 2C: shows a vibration damper with a conical basic shape, located around a steering main shaft;
- Figure 2D: shows a vibration damper according to the invention, located detachably centrally in a steering main shaft.

### PREFERRED EMBODIMENTS

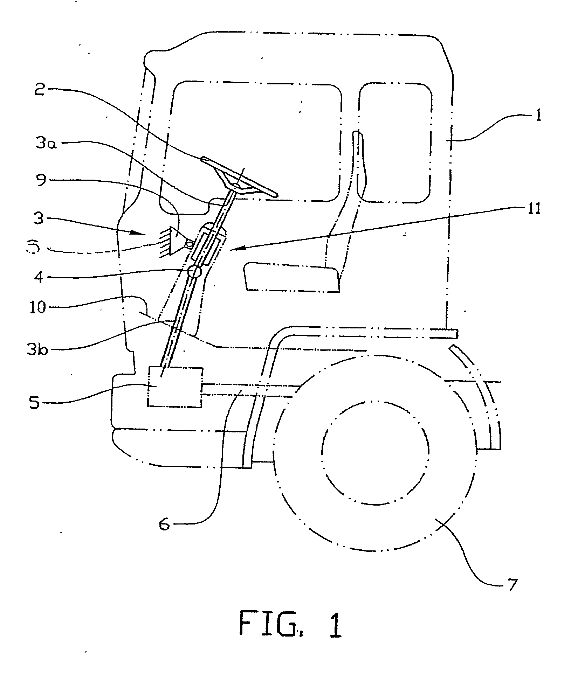

Figure 1 shows diagrammatically a vehicle with a cab 1 in which a steering wheel 2 for steering the vehicle is mounted. The steering wheel 2 is connected to a steering main shaft 3 which can comprise one or more portion(s) 3a, 3b preferably connected to one or more universal joints 4. The steering main shaft 3 is connected to a steering gear 5 which, via a steering linkage 6, can act on a pair of wheels 7 in order to steer the vehicle. The steering main shaft can extend in a support 8, the upper part of which is provided with an attachment 9 mounted on the cab or dashboard of the vehicle, and the lower part of which is fixed to the floor 10 of the cab.

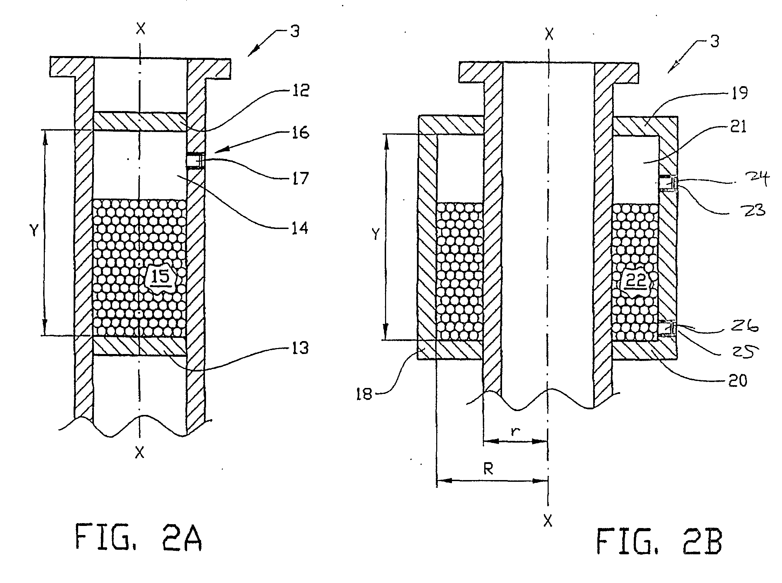

The upper part 3a of the steering main shaft 3 is provided with a vibration damper 11, which can be located in or around the steering main shaft, as can be seen from Figures 2A-D.

Figure 2A shows a steering main shaft 3 with a circular cross section and with a cylindrical basic shape along its longitudinal axis X. An upper and lower circular plate 12, 13 delimit an inner cavity 14 in the steering main shaft 3, which cavity is filled with a granular material 15 to a predetermined level. The distance Y₁ between the plates is calculated with regard to the volume of a predetermined material with a given density which is required in order to damp vibrations in a frequency range applying for the vehicle. The plates 12, 13 can be mounted against shoulders or recesses in the inner surface of the steering main shaft or fixed by means of welding, soldering, adhesive bonding or another suitable method. The method of mounting is determined with regard to the inner dimension, material thickness and material of the steering main shaft. Filling with granular material takes place through an opening 16 in the wall of the steering main shaft 3 in proximity to the upper plate 12. The opening is preferably closed by a threaded plug 17 but can also be closed permanently by a plug which is adhesively bonded, soldered or welded firmly in the opening 16. Plugs with a snap function for demountable or permanent mounting can also be used.

Figure 2B shows a steering main shaft 3 with a circular cross section and with a cylindrical basic shape along its longitudinal axis X. This steering main shaft 3 is provided with an outer sleeve 18 with the same basic shape but with a greater diameter. The upper and lower ends of the sleeve 18 consist of annular plates 19, 20, the inner surfaces of which bear against the outer surface of the steering main shaft. The sleeve 18, 19, 20 thus delimits a cavity 21 along the outer periphery of the steering main shaft 3, which cavity is filled with a granular material 22 to a predetermined level. The volume of the cavity is determined by the distance Y₂ between the annular plates and the difference between the outer radius r of the steering main shaft 3 and the inner radius R of the sleeve. With the aid of these dimensions, the volume of a predetermined material with a given density which is required in order to damp vibrations in a frequency range applying for the vehicle can be calculated.

Filling with granular material takes place through a first opening 23 in the upper part of the wall of the sleeve 18. The opening is preferably closed by a threaded plug 24, or alternatively a snap-locking plug. In order to allow emptying-out or exchange of granular material, the sleeve is provided with a second opening 25 in its lower part. The opening 25 is closed by a further, second plug 26.

If emptying-out of the material is not relevant, the sleeve is provided with an upper opening which is closed permanently by a plug which is snapped, adhesively bonded, soldered or welded firmly in the opening.

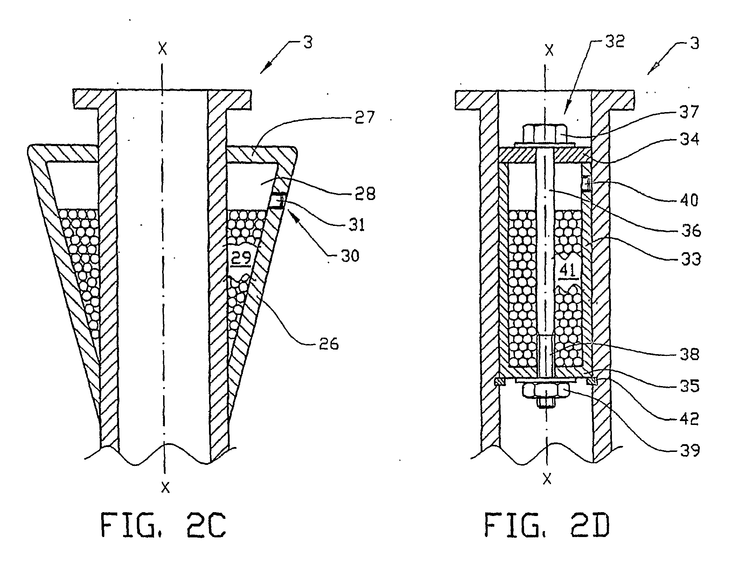

Figure 2C shows an alternative embodiment of the damper according to Figure 2B above. According to this embodiment, the steering main shaft 3 is provided with an outer sleeve 26 with a conical basic shape. As can be seen from the figure, the conical sleeve 26 adjoins the outer periphery of the steering main shaft 3 directly at its lower end, while its upper end is provided with an annular plate 27 which adjoins the steering main shaft so as to form an inner cavity 28. The cavity 28 is filled with a granular material 29 to a predetermined level. Filling with the granular material takes place through a first opening 30 in the upper part of the wall of the sleeve 26. The opening is preferably closed by a threaded plug 31, or alternatively a snap-locking plug. Permanent closure is also possible, as described above.

Figure 2D shows an embodiment with a demountable damper 32 which is located inside a hollow steering main shaft 3. The damper 32 consists of a cylinder 33 which is closed by a pair of plates 34, 35 at respective ends. A through-screw 36 extends through central cutouts in said plates 34, 35, the head 37 of the screw bearing against the upper plate 34 and its threaded end 38 extending through a nut 39 fixed to the lower plate 35. The sleeve is provided with a plug 40 for filling with granular material 41, in the same way as described above. According to this embodiment, the inner cavity of the cylinder is filled with a volume of material calculated as above before mounting in the steering main shaft 3. The outer diameter of the cylinder 33 is adapted to the inner diameter of the steering main shaft 3 in such a way that it extends in it with a sliding fit. When the damper 32 has been located in the correct position along the longitudinal axis X of the steering main shaft, e.g. against a stop 42, the screw 36 can be tightened. The tightening force brought about by the screw 36 presses the walls of the cylinder outward and locks the damper relative to the steering main shaft 3.

The cavities above can be dimensioned so as to correspond exactly to the calculated volume but can also be designed to be slightly larger in order to facilitate filling. The embodiments indicated above relate to a steering main shaft with an essentially circular cross section, but it is of course possible to use other cross sections such as e.g. a square cross section.

According to a preferred embodiment, the granular material consists of spherical grains or balls made of a ferromagnetic material, preferably of steel. The steel balls can be either solid or sintered. The steel balls are preferably intended to damp speeds in the range 550-1300 rpm, which correspond to the frequency range 25-65 Hz.

The invention is not to be regarded as being limited to the illustrative embodiments described above, but a number of further variants and modifications are conceivable within the scope of the following patent claims.

## Claims

1. A vehicle steering column vibration damping arrangement for damping vibrations in a vehicle steering wheel mounted on a steering main shaft connected to a pair of steered wheels via a steering linkage, **characterized in that** the steering main shaft comprises a hollow portion along its longitudinal axis, which portion is filled with a granular material to a predetermined level.

2. The arrangement as claimed in claim 1, **characterized in that** the level is proportional to the cross-sectional area of the hollow portion and the frequency range of the vibrations, it being possible for the volume of the granular material with a given density which is required in order to damp vibrations in a frequency range applying for the vehicle to be calculated.

3. The arrangement as claimed in claim 2, **characterized in that** the hollow portion is filled to a predetermined level with a material with a given grain size and a given density, the hollow portion being arranged to damp vibrations with a frequency exceeding 20 Hz.

4. The arrangement as claimed in claim 3, **characterized in that** the hollow portion is filled to a predetermined level with a material with a given grain size and a given density, the hollow portion being arranged to damp vibrations with a frequency in the range 20-150 Hz.

5. The arrangement as claimed in claim 3, **characterized in that** the hollow portion is filled to a predetermined level with a material with a given grain size and a given density, the hollow portion being arranged to damp resonant vibrations with frequencies within a range corresponding to the engine speed register of the vehicle.

6. The arrangement as claimed in claim 1, **characterized in that** the hollow portion of the steering main shaft has a circular cross section.

7. The arrangement as claimed in claim 1, **characterized in that** the hollow portion of the steering main shaft has an annular cross section.

8. The arrangement as claimed in claim 1, **characterized in that** the hollow portion of the steering main shaft has a cylindrical basic shape.

9. The arrangement as claimed in claim 1, **characterized in that** the hollow portion of the steering main shaft has a conical basic shape.

10. The arrangement as claimed in claim 1, **characterized in that** the hollow portion of the steering main shaft comprises a closed cylinder mounted detachably in the steering main shaft.

11. The arrangement as claimed in claim 1, **characterized in that** the granular material is abrasion-resistant. (10)

12. The arrangement as claimed in claim 11, **characterized in that** the granular material has an average diameter within the range 0.1-5 mm.

13. The arrangement as claimed in claim 11, **characterized in that** the granular material has a density exceeding 3000 kg/m³.

14. The arrangement as claimed in claim 11, **characterized in that** the granular material consists of spherical metal balls.

15. The arrangement as claimed in claim 14, **characterized in that** the granular material consists of steel balls.

16. The arrangement as claimed in claim 11, **characterized in that** the granular material consists of a ceramic material.

17. The arrangement as claimed in claim 11, **characterized in that** the granular material consists of silicon or glass.

## Patentansprüche

1. Fahrzeuglenksäulen-Vibrationsdämpfungsanordnung zur Dämpfung von Vibrationen in einem Fahrzeuglenkrad, das an einer Hauptlenkwelle angebracht ist, die über ein Lenkgestänge mit einem Paar gelenkter Räder verbunden ist, **dadurch gekennzeichnet, daß** die Hauptlenkwelle einen hohlen Abschnitt längs ihrer Längsachse aufweist, wobei dieser Abschnitt bis zu einem vorgegebenen Niveau mit einem körnigen Material gefüllt ist.

2. Anordnung nach Anspruch 1, **dadurch gekennzeichnet, daß** das Niveau zur Querschnittsfläche des hohlen Abschnitts und dem Frequenzbereich der Vibrationen proportional ist, wobei es möglich ist, das Volumen des körnigen Materials mit einer gegebenen Dichte, das erforderlich ist, um Vibrationen in einem Frequenzbereich zu dämpfen, der für das Fahrzeug zutrifft, zu berechnen.

3. Anordnung nach Anspruch 2, **dadurch gekennzeichnet, daß** der hohle Abschnitt bis zu einem vorgegebenen Niveau mit einem Material mit einer gegebenen Korngröße und einer gegebenen Dichte gefüllt ist, wobei der hohle Abschnitt eingerichtet ist, Vibrationen mit einer Frequenz zu dämpfen, die 20 Hz überschreitet.

4. Anordnung nach Anspruch 3, **dadurch gekennzeichnet, daß** der hohle Abschnitt bis zu einem vorgegebenen Niveau mit einem Material mit einer gegebenen Korngröße und einer gegebenen Dichte gefüllt ist, wobei der hohle Abschnitt eingerichtet ist, Vibrationen mit einer Frequenz im Bereich 20-150 Hz zu dämpfen.

5. Anordnung nach Anspruch 3, **dadurch gekennzeichnet, daß** der hohle Abschnitt bis zu einem vorgegebenen Niveau mit einem Material mit einer gegebenen Korngröße und einer gegebenen Dichte gefüllt ist, wobei der hohle Abschnitt eingerichtet ist, Resonanz-Vibrationen mit Frequenzen in einem Bereich zu dämpfen, der dem Motordrehzahlregister des Fahrzeugs entspricht.

6. Anordnung nach Anspruch 1, **dadurch gekennzeichnet, daß** der hohle Abschnitt der Hauptlenkwelle einen kreisförmigen Querschnitt aufweist.

7. Anordnung nach Anspruch 1, **dadurch gekennzeichnet, daß** der hohle Abschnitt der Hauptlenkwelle einen ringförmigen Querschnitt aufweist.

8. Anordnung nach Anspruch 1, **dadurch gekennzeichnet, daß** der hohle Abschnitt der Hauptlenkwelle eine zylinderische Grundform aufweist.

9. Anordnung nach Anspruch 1, **dadurch gekennzeichnet, daß** der hohle Abschnitt der Hauptlenkwelle eine konische Grundform aufweist.

10. Anordnung nach Anspruch 1, **dadurch gekennzeichnet, daß** der hohle Abschnitt der Hauptlenkwelle einen geschlossenen Zylinder aufweist, der lösbar in der Hauptlenkwelle angebracht ist.

11. Anordnung nach Anspruch 1, **dadurch gekennzeichnet, daß** das körnige Material abriebfest ist. (10)

12. Anordnung nach Anspruch 11, **dadurch gekennzeichnet, daß** das körnige Material einen durchschnittlichen Durchmesser im Bereich 0,1-5 mm aufweist.

13. Anordnung nach Anspruch 11, **dadurch gekennzeichnet, daß** das körnige Material eine Dichte aufweist, die 3000 kg/m³ überschreitet.

14. Anordnung nach Anspruch 11, **dadurch gekennzeichnet, daß** das körnige Material aus kugelförmigen Metallkugeln besteht.

15. Anordnung nach Anspruch 14, **dadurch gekennzeichnet, daß** das körnige Material aus Stahlkugeln besteht.

16. Anordnung nach Anspruch 11, **dadurch gekennzeichnet, daß** das körnige Material aus einem Keramikmaterial besteht.

17. Anordnung nach Anspruch 11, **dadurch gekennzeichnet, daß** das körnige Material aus Silizium oder Glas besteht.

## Revendications

1. Agencement d'amortissement des vibrations d'une colonne de direction de véhicule, destiné à amortir des vibrations dans un volant de direction de véhicule monté sur un arbre de direction principal relié à une paire de roues directrices via une tringlerie de direction, **caractérisé en ce que** l'arbre de direction principal comporte une partie creuse le long de son axe longitudinal, laquelle partie est remplie d'un matériau granulaire jusqu'à un niveau prédéterminé.

2. Agencement selon la revendication 1, **caractérisé en ce que** le niveau est proportionnel à l'aire de coupe transversale de la partie creuse et la plage de fréquence des vibrations, le volume de matériau granulaire ayant une densité donnée qui est nécessaire pour amortir des vibrations dans une plage de fréquence s'appliquant au véhicule pouvant être calculé.

3. Agencement selon la revendication 2, **caractérisé en ce que** la partie creuse est remplie jusqu'à un niveau prédéterminé d'un matériau ayant une dimension de grain donnée et une densité donnée, la partie creuse étant prévue pour amortir des vibrations ayant une fréquence dépassant 20 Hz.

4. Agencement selon la revendication 3, **caractérisé en ce que** la partie creuse est remplie jusqu'à un niveau prédéterminé d'un matériau ayant une dimension de grain donnée et une densité donnée, la partie creuse étant prévue pour amortir des vibrations ayant une fréquence dans la plage de 20 à 150 Hz.

5. Agencement selon la revendication 3, **caractérisé en ce que** la partie creuse est remplie jusqu'à un niveau prédéterminé d'un matériau ayant une dimension de grain donnée et une densité donnée, la partie creuse étant prévue pour amortir des vibrations résonantes avec des fréquences dans une plage correspondant au registre de vitesse de moteur du véhicule.

6. Agencement selon la revendication 1, **caractérisé en ce que** la partie creuse de l'arbre de direction principal a une coupe transversale circulaire.

7. Agencement selon la revendication 1, **caractérisé en ce que** la partie creuse de l'arbre de direction principal a une coupe transversale annulaire.

8. Agencement selon la revendication 1, **caractérisé en ce que** la partie creuse de l'arbre de direction principal a une forme basique cylindrique.

9. Agencement selon la revendication 1, **caractérisé en ce que** la partie creuse de l'arbre de direction principal a une forme basique conique.

10. Agencement selon la revendication 1, **caractérisé en ce que** la partie creuse de l'arbre de direction principal comporte un cylindre fermé monté de manière amovible dans l'arbre de direction principal.

11. Agencement selon la revendication 1, **caractérisé en ce que** le matériau granulaire est résistant à l'abrasion (10).

12. Agencement selon la revendication 11, **caractérisé en ce que** le matériau granulaire a un diamètre moyen dans la plage de 0,1 à 5 mm.

13. Agencement selon la revendication 11, **caractérisé en ce que** le matériau granulaire a une densité dépassant 3000 kg/m³.

14. Agencement selon la revendication 11, **caractérisé en ce que** le matériau granulaire est constitué de billes de métal sphériques.

15. Agencement selon la revendication 14, **caractérisé en ce que** le matériau granulaire est constitué de billes d'acier.

16. Agencement selon la revendication 11, **caractérisé en ce que** le matériau granulaire est constitué d'un matériau de céramique.

17. Agencement selon la revendication 11, **caractérisé en ce que** le matériau granulaire est constitué de silicium ou de verre.
